# EUROPEAN PATENT SPECIFICATION

(11) **EP 2 538 226 B1**
(45) Date of publication and mention of the grant of the patent: **26.02.2014**
(21) Application number: 12158536.8
(22) Date of filing: 08.03.2012
(51) Int. Cl.: G01N 35/00

(54) **Sampler**
Probenehmer
Echantillonneur

(30) Priority: 23.06.2011 IT BS20110092
(43) Date of publication of application: 26.12.2012
(73) Proprietor: HTA S.R.L., 25131 Brescia (IT)
(72) Inventor: Marchini, Enrico, 25016 Ghedi (BS) (IT); Marchini, Giovanni, 25122 Brescia (BS) (IT); Riccardi, Marco, 25030 Castel Mella (BS) (IT)
(74) Representative: Trentin, Michele

(56) References cited:
- WO-A1-2005/050497
- US-A1- 2004 108 225
- US-A1- 2008 156 117
- US-A1- 2009 068 066

## Description

### Field of application

The present invention generally relates to the technical field of the devices for the chemical analysis particularly relates to a sampler for chemical analyzers.

More in detail, the present invention concerns a sampler for inserting into the chemical analyzers appropriate quantities of liquids and/or gases necessary to carry out specific analysis.

### Background of the invention

Devices, also called analyzers, are typically employed in the field of the chemical analysis. Predetermined quantities of liquids or gases are inserted in them and later analyzed.

In order to automate as far as possible this procedure, to the chemical analyzers samplers are generally associated, that is devices able to withdraw predetermined quantities of liquids or gases from fitting containers typically consisting of phials.

According to the prior art, the samplers may be devices apart or they may be integrated in the analysing apparatus.

The section of the sampler which in practice performs the withdrawing of the liquid or of the gas typically consists of one or more suitably moved syringes. In particular, moving means of the pistons are present for carrying out the withdrawal of the sample and the injection thereof into the analyzer.

Moreover, many samplers comprise further moving means of the syringes to move them between the containers, where they carry out the withdrawal, and the analyzer, where the infiltration of the sample takes place.

In this sense, the known samples may be Cartesian or cylindrical. In the first case the syringe is moved on a plane where all containers and the analyzer are associated each to specific Cartesian co-ordinates. However it is evident that this solution is particularly bulky.

In the second category, on the contrary, the syringe is moved in a circumference arch. This solution is particularly compact, but requires the movement of the containers to place them along the arch.

As the quantity of liquid or gas withdrawn by the syringe, and constituting the sample, is typically bound to the analysis protocol, it is evident that it has to be precise. It is therefore fundamental that the movement of the piston is particularly precise. Moreover, the volume of the syringe in use, that is the capacity thereof in terms of liquids or gases, has to be absolutely known.

As known, each syringe is characterized by a wide number of parameters, such as for instance the volume, the fact that the piston is or not covered in PTFE, the type and conformation of the needle, the size in terms of length as well as inner and outer diameter of the needle, the material with which the syringe body and the needle are made, and so on.

Moreover, the syringe distinguishes itself for a series of individual variables such as for instance, the degree of previous use, the presence or absence of a possible certification or settlement.

All these variables and parameters, that is these technical features, are not generally identifiable with the naked eye, nor the known sampler can distinguish the syringes in these terms. ,

In order to overcome this problem some syringe producers have started to use a colour code to distinguish syringes of different volume from each other. In other words, a portion of the syringes has a fitting colour to allow the operator to distinguish them from each other.

It is however evident that this solution is affected by human error if the operator does not pay enough attention or confuses the colour with each other. Moreover, as the syringes are typically placed in the sampler, either this last one is provided with inspection windows for the syringes at disposal of the operator, or the operator has to stop the sampler and to open it to verify the type of syringes in use.

Both situations obviously cause drawbacks. In the first case the sampler has increased manufacturing costs, whereas in the second case the sampler is subject to contamination during the performance of a series of analysis. Moreover, the procedure of blocking the operation of the sampler and opening thereof to fulfil the checks is expensive in terms of time.

Other samplers provided with housings for syringes specialized for the different volume types are therefore known. Moreover, each housing typically has an electronic codification so that the sampler can autonomously recognize the housing type and therefore the volume of the syringe.

Although this solution allows to overcome the possibility of the human error, it is affected by other drawbacks, which also affect also the solution with the colours codes.

In particular, the known solutions allow to verify only one technical feature of the syringes in use, that is the volume, losing sight of all the other ones, which are however relevant for the respect of the analysis protocols. For example, the materials forming the piston, the syringe body or the needle in use might be not suitable to the type of chemical analysis to perform.

Also the size of the needle may be not suitable to the container type. For example, the containers typically consist of phials closed by fitting membranes. These last ones are so formed that, once pierced, later there is a "self-closing" of the hole. If the syringe needle is too long for the phial or too large for the particular container type, the results obtained by the analyzer may be compromised because of the breaking of the needle as well as because of the non-closing of the hole on the phial membrane which may cause the dispersion of its content into the environment or to the contamination of the content.

Moreover, syringes are used more times. However they are subject to wear, so that they have to be replaced after a determined number of uses. To overcome this drawback according to the prior art the operator proceeds to the replacement after a predetermined number of uses. However this solution not only is affected by human error, but also lacks of optimization. in fact, each syringe type has a different degradation from the other ones determined by the type of materials which form it. The replacement of the syringes after a predetermined number of uses independently from the syringe type leads to an increase of the costs of the chemical analysis because of the non-optimization of the materials in use.

Document US 2008/156117 is known. It discloses a sampler comprising some syringes each with a transponder containing information relating to the syrirge. The document fails on stop the chemical analysis if the syringe in use have not the requested characteristics or it have been used too much times.

### Summary of the invention

Object of the present invention is to at least partially overcome the above described drawbacks by providing a sampler for chemical analyzers which allows to have the certainty that the syringe in use has all indispensable technical features for carrying out the programmed chemical analysis.

Another object of the invention is to provide a sampler which can autonomously determine the technical features of the syringes in use and block, if necessary, the preparation of the samples for the chemical analyzer to which it is associated without need of human intervention.

In other words, another object of the invention is to provide a sampler which allows to avoid the constant present of an operator so as to allow a reduction of the operative costs, and to avoid then human error in the evaluation of the appropriateness of the syringe in use.

Another object is to provide a sampler which can autonomously determine the technical features of the syringes in order not to have to provide openings for the inspection thereof or to oblige the operator to an operative block of the machines to be able to open the sampler and control the type of syringe in use.

Within these general objects, a particular object of the invention is to provide a sampler which can autonomously determine the volume of the syringes in use.

Another particular object of the invention is to provide a sampler which can autonomously determine the number of uses of the syringes in use.

Another object of the invention is to provide a sampler which can autonomously determine the forming materials and the size of the needles and of the syringes in use.

These and other objects, as better explained hereafter, are fulfilled by sampler for chemical analyzers according to the following claims which are integrant part of the present description.

In particular, the sampler may comprise one or more substances containers for performing chemical analysis, and at least one syringe, placed within the sampler, for the withdrawal of predetermined quantities of these substances. Appropriately, the sampler comprises at least one support and movement device of the syringe.

The sampler also comprises at least one transponder steadily associated to the syringe and containing information concerning the technical features thereof. Also at least one communication device with the transponder is present at least for reading the above information.

Advantageously, therefore, the sampler may autonomously know, that is without the human intervention, the technical features of the syringes in use such as volume, forming materials, needle size, number of uses of the syringe and so on.

The sampler also comprises a logical control unit operatively connected to the communication device to determine the type of syringe in use and to activate a confirmation signal when the type is suitable for preparing the sample to insert into the chemical analyzer.

Again, the logical unit may also verify the number of uses of the syringe before activating the above confirmation signal.

Advantageously all this may happen without the human intervention. In other words, once the chemical analysis to carry out in sequence are set, the sampler may autonomously proceed in verifying that the operating conditions, with particular reference to the syringes in use, satisfy the protocols of the above analysis and later in starting the operations of preparation of the samples and the insertion thereof into the chemical analyzers. In case the operating conditions are not respected, the sampler may block the procedure and, possibly, activate one or more alarm signals.

Therefore the constant presence of the operator is not necessary any longer, to verify the correspondence of the syringe in use with what provided in the protocol of the chemical analysis to be carried out.

Advantageously again, it is not necessary either that the operator does an operative block of the machines to check the type of syringe in use with the risk of compromising the outstanding analysis, or to provide windows in the sampler to allow the inspection of the syringe in use.

### Brief description of the drawings

Further features and advantages of the invention will appear more evident upon reading the detailed description of some preferred, non-exclusive embodiments of a sampler for chemical analyzers according to the invention, which are described as nonlimiting examples with the help of the annexed drawings, in which:
FIG. 1 represents a sampler according to the invention in axonometric view;
FIGS. 2 to 5 represent details of the sampler of FIG. 1;
FIGS. 6a to 6b represent two operating moments of the apparatus of FIG. 1.

### Detailed description of some preferred embodiments of the invention

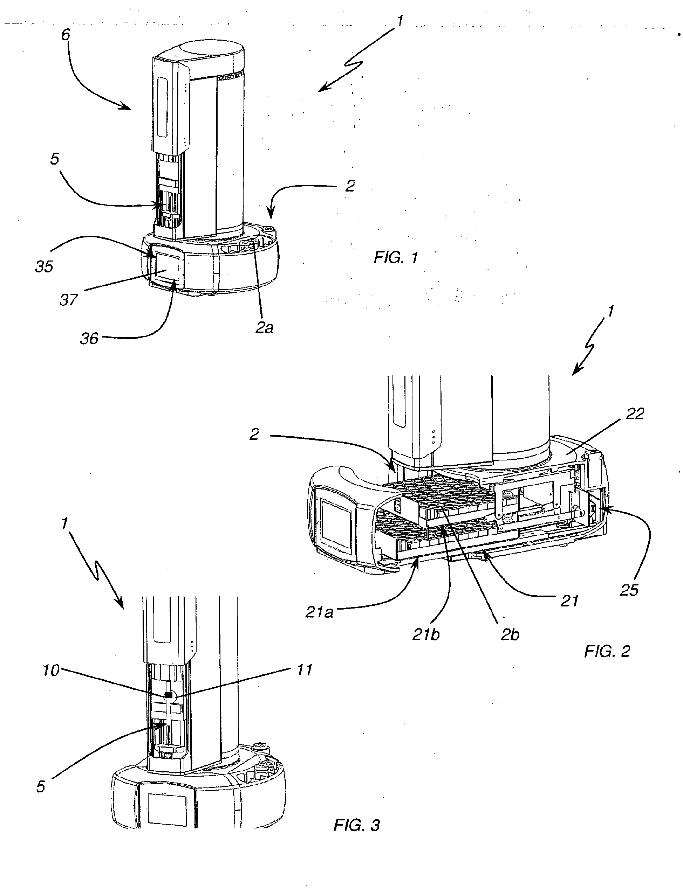

Referring to the above figures, and particularly to FIG. 1, a sampler **1** for chemical analyzers is described. As observable, it is a sampler of cylindrical type, however this must not be considered as limiting for different embodiments in which the sampler is of Cartesian type.

In any case, it comprises a plurality of containers **2** in their turn containing substances for carrying out chemical analysis.

In particular, first containers **2a** are used to contain accessory substances as solvents or the like, whereas second containers **2b,** observable in the detail of fig. 2, are used to contain the samples to be submitted to analysis. These last ones are generally contained in fitting trays.

Obviously, the number as well as the arrangement of the containers are not limiting features.

According to an aspect of the invention, the sampler **1** comprises a syringe **5** for withdrawing predetermined quantities of the above mentioned substances. This syringe **5,** typically placed in the sampler, is used to withdraw predetermined quantities of samples from the second containers **2b** and, in case, predetermined quantities of solvents or the like from the first containers **2a.**

Also in this case, the number of syringes must not be considered as limiting. In other words, embodiments may be manufactured, in which more syringes also operating simultaneously may be present.

Going back to the described embodiment, the sampler **1** also comprises a a support and movement device **6** of the syringe **5.** Typically it consists of a housing and of a motor which moves the housing and the piston of the syringe **5,** but also this aspect must not be considered as limiting for different embodiments. The only essential aspect is the presence of the working of the piston.

According to a further aspect of the invention, the syringe **5** comprises, as visible in fig. 3, a transponder **10** containing information relating to the technical specifications of the syringe. Consequently, the sampler **1** also comprises a communication device **11** with the transponder **10** able to read this information.

Typically, the transponder **10** is a device also known with the name RFID, that is Radio Frequency IDentification, and contains several technical specification of the syringe **5** such as, for example, its volume, the materials with which it is manufactured, type and size of the needle, possible certifications and so on.

In fact, as previously underlined, for the sake of the protocols of chemical analysis it is relevant to know not only the quantity of liquids or gases the syringe **5** in use can contain, but also whether the needle is suitable to the type of containers **2** in which there are the substances to be withdrawn for forming the sample to be submitted to chemical analysis. Again, it is often essential to know whether the materials with which the several parts of the syringe **5** are made are compatible with the analysis to be performed.

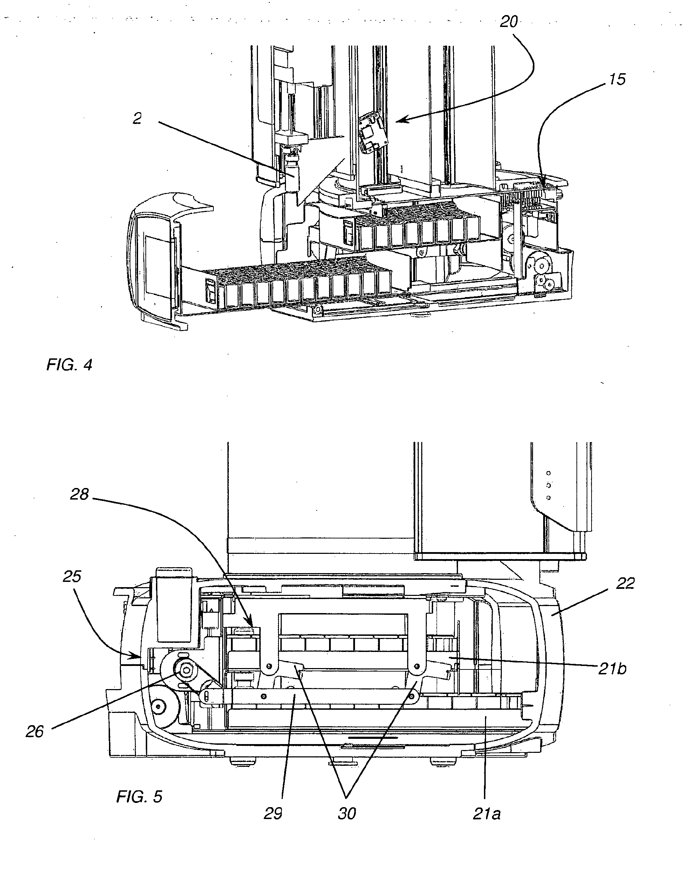

Appropriately, the sampler **1** comprises also, as observable in the detail of fig. 4, a logical control unit **15** operatively connected to the communication device **11** to determine, by means of the above information, the type of syringe **5** in use and to activate a confirmation signal when the syringe it suitable to carry out the preparation of the sample for the chemical analysis.

Advantageously, therefore, the sampler **1** of the invention can autonomously determine whether the technical characteristics of the syringe **5** in use are suitable to the chemical analysis set by the user. Therefore the possibility of a human error is overcome and also the previously listed drawbacks of the known samplers are overcome, as the sampler **1** of the invention carries our a check of more technical specifications of the syringe **5** and not only of its volume.

Advantageously again, in case the necessary technical specifications are not respected, the sampler **1** of the invention blocks its operation not giving the confirmation to proceed. Evidently, this allows to ensure the reliability of the results of the performed chemical analysis.

Therefore the constant presence of the operator is not necessary any longer, to verify the correspondence of the syringe in use with what provided in the protocol of the chemical analysis to be carried out.

Advantageously again, the operator has not to do any operative block of the machines to open the sampler and to check the type of syringe in use with the risk of compromising the outstanding analysis. It is not necessary to provide windows in the sampler to allow the inspection of the syringe in use.

Concerning the technical specifications, in the described embodiment they are memorized directly in the transponder **10,** however according to different embodiments in the transponder identification codes of the syringe are memorized and the technical specifications are codified in a fitting memory at disposal of the logical control unit.

As said before, another important aspect for the analysis protocols is the wear of the syringes determined by the repeated use thereof. In this sense, the sampler **1** of the invention comprises a memory element susceptible to record the number of uses of the syringe **5** in use. In this way, the logical control unit **15** can verify also this parameter before activating the confirmation signal. Of course the logical control unit **15** has at disposal the maximum number of uses for a syringe **5,** as predetermined value. This datum may be advantageously differentiated according to the type of syringe and of chemical analysis done, so optimizing the materials used, and so the costs.

The memory element is typically comprised in the transponder **10** and is coincident with the memory which preserves all other technical specifications of the syringe 5. According to this technical configuration, the communication device 11 comprises a circuital portion of information writing in the transponder **10** to memorize therein and to update the number of uses.

Also in this case the described configuration must not be considered as limiting for different embodiments of the invention, according to which, for example, the memorization of the number of uses takes place in the logical control unit which thus has a fitting memory area. Of course in this case the transponder comprises a piece of information of univocal identification of the syringe in use.

As pointed out more times above, the sampler **1** of the invention is configured so as to allow to automate and accelerate its operation although ensuring the observance of the analysis protocols.

In order to increase its automation degree, the sampler **1** also comprises a bar code reader **20,** In fact, as the containers **2** of the substances for carrying out the chemical analysis, whether they are substances forming the samples or preparation substances of the samples (solvents and the like), are provided with bar codes, the reader **20** allows to automate also the check that the liquids and gases which are withdrawn with the syringe **5** to prepare the sample to be analysed are the correct ones. In fact, as known, their arrangement in the sampler **1** is assigned to an operator, so that the analysis may be affected by human error if the operator mistakes the order of this arrangement. Therefore, the bar code reader **20** allows to check, before use, that the substance to be withdrawn actually corresponds to the substance provided by the protocol. In this sense, also this reader 20 is operatively connected to the logical control unit **15** which activates or not the confirmation signal only after this further check.

However, the now described operation might be not feasible in case the containers **2** are test-tubes with particularly small diameter. In this case, in fact, the reading of the bar code might be not possible because a part of it might be placed on an area of the test tube which is not turned towards the reader **20.** To overcome this drawback, the sampler **1** comprises also, although not represented in the figures, a motor which moves the containers **2** to sequentially expose the whole lateral surface thereof to the reader **20.** In particular, the motor gets the containers **2** rotate along their axis of longitudinal development, but this is only an example of possible embodiment of the invention particularly useful if the containers consist of cylindrical phials.

According to a further aspect of the invention, the sampler **1** comprises a pair of extractable drawers **21** in which the second containers **2b** are housed. As observable the extractable drawers **21** are placed in the basis **22** of the sampler **1** and the second containers **2b** are reachable by the syringe **5** with the extraction degree of the drawers **21**.

It is therefore evident that, in the optic to automate as far as possible the operation of the sampler **1** of the invention, according to another aspect of the invention observable also in fig. 5, the movement of the drawers **21** is carried out by means of a moving device **25** operatively connected with the logical control unit **15.** The choice of what drawer **21** to extract and the extraction degree thereof are therefore assigned to the logical control unit **15** which autonomously carries out this operation. Evidently, the choice to use the drawers **21** allows to make the sampler **1** compact and not bulky as well as to better protect the second containers **2b** with the substances they contain. At the same time, the automation of their extraction allows to obtain these results without having to get an operator intervene during the operative step of preparation of the samples to be analysed.

Also in this case it is pointed out, if necessary, that what said as far as here must not be considered as limiting for different embodiments according to which, for example, the number of drawers is different from two and the containers contained therein may comprise or limit themselves to the first containers.

Going down into the executive detail of the movement device 25, it comprises a motor activated by the logical unit 15 and connected to the drawers 21 by means of a mechanical transmission.

Also a leverages system **28** activated by the logical control unit **15** is present, allowing to move the lower drawer **21a** alone or together with the upper drawer **21b** so as to make available the containers **2** arranged on this last one. In particular, the leverages **28** comprise a leverage **29** to which hooks **30** are rotatably connected.

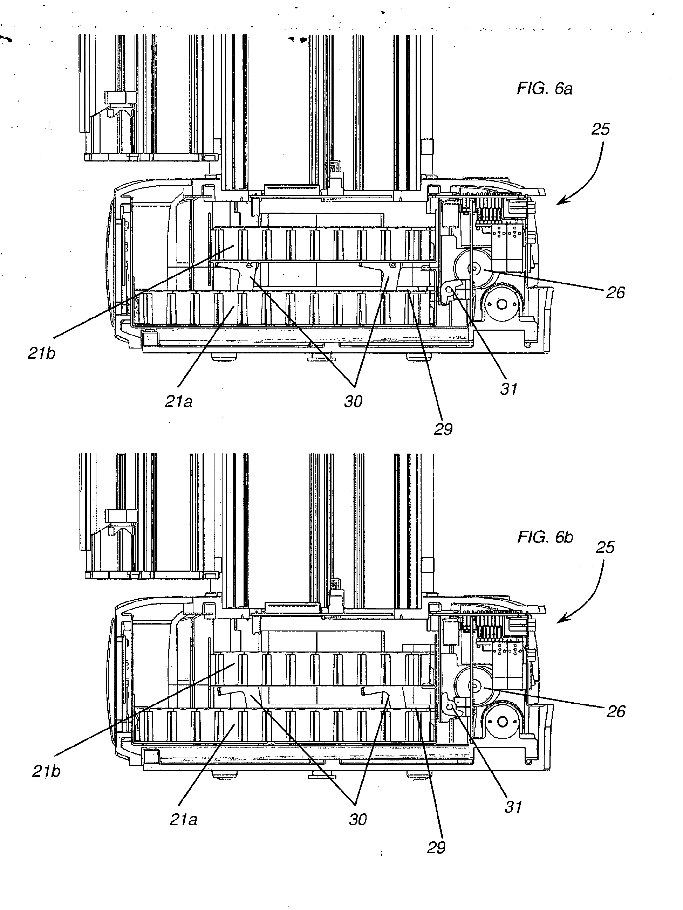

As observable in the sequence detail of figs. 6a and 6b, the selection of the drawer **21a** or **21b** to be extracted is made by the logical control unit **15** moving, by means of a fitting motor **26,** the leverage **29** and, with it the hooks **30.** This last rotation brings the hooks **30** to hook or unhook the upper drawer **21b.** When the hooks **30** hook the upper drawer **21b,** they lift it from the support on the lower drawer **21a** so causing the extraction only of this last one. When the upper drawer **21b** is unhooked, on the contrary, it is placed in support to the lower drawer **21a.** In this case the extraction driving acts on both drawers **21** and the superimposition thereof makes only the containers placed in the upper drawer **21b** available. The manufacturing simplicity of the extraction automation of the drawers **21** is evident.

In order to allow a check of what drawer 21 is set into movement, the sampler 1 also comprises a shaped element **31** rotating with the hooks **30.** In proximity of this shaped element there is an optical device able to recognize the position of the shaped body allowing the sampler **1,** in complete autonomy, to verify that the driven selection of the drawer **21** has taken place correctly. Typically, but not necessarily, the optical device consists of a pair of LEDs rx/tx and the shaped element **31,** in its movements, interposes itself or not between the LEDs so giving a state indication of the selection of the drawers **21.** Of course this embodiment is only an example which must not be considered as limiting for the present invention.

According to a further aspect of the invention, the sampler **1** also comprises an information visualization device **35** and a device for letting in information **36** at disposal of the user and both operatively connected to the logical control unit **15.** They allow to let in information as the list of chemical analysis to carry out, a list of protocols to observe or other and they also allow the sampler **1** to give back information of various type such as, for example, the operative state, alarm signals, or other.

Typically, but not necessarily, the information visualization device **35** and the device for letting in information **36** consist of a single display touch screen **37** which allows to combine in itself both functionalities so reducing the bulk of the sampler **1.**

The above disclosure clearly shows that the sampler of the invention overcomes the drawbacks of the prior art allowing to have certainty that the analysis protocol is observed.

In particular, it autonomously verifies that the syringe has all necessary features and that the number of uses of the syringes does not exceed the wear limit.

Moreover, the sampler allows to automate the control of the correctness of the employed substances. Also the supply of the substances is automated although allowing the compactness of the sampler placing the containers of the substances on extractable drawers.

The sampler of the invention is susceptible of a number of changes and variants, within the inventive concept disclosed in the appended claims. All the details thereof may be replaced by other technically equivalent parts, and the materials may vary depending on different needs, without departing from the scope of the invention, as defined by the claims.

While the sampler of the invention has been described with particular reference to the accompanying figures, the numerals referred to in the disclosure and claims are only used for the sake of a better intelligibility of the invention and shall not be intended to limit the claimed scope in any manner.

## Claims

1. A sampler for chemical analyzers comprising:
- at least one syringe (**5**) placed internally to said sampler (**1**) for withdrawing predetermined quantities of substances for carrying out chemical analysis from one or more containers (**2**);
- at least one support and movement device (**6**) of said at least one syringe **(5);**
- at least one transponder (**10**) stably associated to said syringe **(5)** and containing information relating to a plurality of technical specifications of said syringe (5),
**characterized by** comprising also:
- at least one communication device (**11**) at least to read the information on said transponder (10);
- at least one logical control unit **(15)** operatively connected to said communication device **(11)** to determine, by means of said information, the type of syringe **(5)** placed internally to said sampler **(1)** and to activate an acknowledgment signal when said type is suitable to carry out said withdrawal of predetermined quantities of substances for performing chemical analysis, and a stopping signal of the sampling when the type of said syringe **(5)** has technical specifications not suitable for performing said withdrawal of predetermined quantities of said substances.

2. Sampler according to claim 1, **characterized in** comprising at least one memory element susceptible to record the number of uses of said syringe **(5)**, said logical control unit **(15)** being susceptible to activate said confirmation signal when said number of uses is lower than a predetermined value.

3. Sampler according to claim 2, **characterized in that** said memory element is comprised in said transponder **(10)** and said communication device **(11)** comprises at least one circuital portion for writing information in said memory element of said transponder **(10)** for memorizing therein said number of uses.

4. Sampler according to claim 3, **characterized in that** said memory element is comprised in said logical control unit, said transponder comprising a piece of information of univocal identification of said syringe.

5. Sampler according to any of the preceding claims, **characterized in that** said technical specifications comprise information concerning the volumetric capacity of said syringe (**5**).

6. Sampler according to any of the preceding claims, **characterized in that** said technical specifications comprise information concerning the size of the needle of said syringe (**5**).

## Patentansprüche

1. Probennehmer für chemische Analysegeräte, umfassend:
- mindestens eine Spritze (5), die im Innern des Analysegeräts (1) angeordnet ist, um aus einem oder mehreren Behältern (2) vorbestimmte Mengen von Substanzen zum Ausführen einer chemischen Analyse zu entnehmen;
- mindestens eine Halte- und Bewegungsvorrichtung (6) der mindestens einen Spritze (5);
- mindestens einen Transponder (10), der fest mit der Spritze (5) verknüpft ist und Informationen über eine Vielzahl technischer Spezifikationen der Spritze (5) enthält,
**dadurch gekennzeichnet, dass** er auch Folgendes umfasst:
- mindestens eine Kommunikationsvorrichtung (11), mindestens um die Informationen auf dem Transponder (10) zu lesen;
- mindestens eine logische Steuereinheit (15), die betriebsfähig mit der Kommunikationsvorrichtung (11) verbunden ist, um anhand der Informationen die Art der Spritze (5) zu bestimmen, die innerhalb des Probennehmers (1) angeordnet ist, und um ein Quittierungssignal zu aktivieren, wenn die Art geeignet ist, um das Entnehmen von vorbestimmten Mengen von Substanzen durchzuführen, um eine chemische Analyse auszuführen, und ein Stoppsignal des Probennehmens zu aktivieren, wenn die Art der Spritze (5) technische Spezifikationen aufweist, die nicht geeignet sind, um das Entnehmen vorbestimmter Mengen der Substanzen auszuführen.

2. Probennehmer nach Anspruch 1, **dadurch gekennzeichnet, dass** er mindestens ein Speicherelement umfasst, das in der Lage ist, die Anzahl der Verwendungen der Spritze (5) aufzuzeichnen, wobei die logische Steuereinheit (15) in der Lage ist, das Bestätigungssignal zu aktivieren, wenn die Anzahl der Verwendungen geringer als ein vorbestimmter Wert ist.

3. Probennehmer nach Anspruch 2, **dadurch gekennzeichnet, dass** das Speicherelement in dem Transponder (10) enthalten ist und die Kommunikationsvorrichtung (11) mindestens einen Schaltungsabschnitt umfasst, um Informationen in das Speicherelement des Transponders (10) zu schreiben, um die Anzahl der Verwendungen darin zu speichern.

4. Probennehmer nach Anspruch 3, **dadurch gekennzeichnet, dass** das Speicherelement in der logischen Steuereinheit enthalten ist, wobei der Transponder eine Information einer eindeutigen Identifizierung der Spritze umfasst.

5. Probennehmer nach einem der vorhergehenden Ansprüche, **dadurch gekennzeichnet, dass** die technischen Spezifikationen Informationen über die volumetrische Kapazität der Spritze (5) umfassen.

6. Probennehmer nach einem der vorhergehenden Ansprüche, **dadurch gekennzeichnet, dass** die technischen Spezifikationen Informationen über die Größe der Nadel der Spritze (5) umfassen.

## Revendications

1. Echantillonneur pour analyseurs chimiques, comprenant :
- au moins une seringue (5) placée à l'intérieur dudit échantillonneur (1) pour prélever des quantités prédéterminées de substances en vue de la réalisation d'une analyse chimique à partir d'un ou plusieurs récipients (2) ;
- au moins un dispositif de support et de déplacement (6) de ladite au moins une seringue (5) ;
- au moins un transpondeur (10) associé de façon stable à ladite seringue (5) et contenant des indications relatives à une pluralité de caractéristiques techniques de ladite seringue (5), **caractérisé en ce qu'**il comprend également :
- au moins un dispositif de communication (11) au moins destiné à lire les indications dudit transpondeur (10) ;
- au moins une unité de commande logique (15) reliée fonctionnellement audit dispositif de communication (11) pour déterminer, au moyen desdites indications, le type de seringue (5) placée à l'intérieur dudit échantillonneur (1) et pour activer un signal d'acquittement lorsque ledit type convient à la réalisation dudit prélèvement de quantités prédéterminées de substances en vue de la réalisation d'une analyse chimique, et un signal d'arrêt de l'échantillonnage lorsque le type de ladite seringue (5) présente des caractéristiques techniques qui ne conviennent pas à la réalisation dudit prélèvement de quantités prédéterminées desdites substances.

2. Echantillonneur selon la revendication 1, **caractérisé en ce qu'**il comprend au moins un élément mémoire susceptible d'enregistrer le nombre d'utilisations de ladite seringue (5), ladite unité de commande logique (15) étant susceptible d'activer ledit signal de confirmation lorsque ledit nombre d'utilisations est inférieur à une valeur prédéterminée.

3. Echantillonneur selon la revendication 2, **caractérisé en ce que** ledit élément mémoire est compris dans ledit transpondeur (10) et ledit dispositif de communication (11) comprend au moins une partie circuit permettant d'enregistrer des indications dans ledit élément mémoire dudit transpondeur (10) afin d'y mémoriser ledit nombre d'utilisations.

4. Echantillonneur selon la revendication 3, **caractérisé en ce que** ledit élément mémoire est compris dans ladite unité de commande logique, ledit transpondeur comprenant une indication d'identification univoque de ladite seringue.

5. Echantillonneur selon l'une quelconque des revendications précédentes, **caractérisé en ce que** lesdites caractéristiques techniques comprennent des indications concernant la capacité volumétrique de ladite seringue (5).

6. Echantillonneur selon l'une quelconque des revendications précédentes, **caractérisé en ce que** lesdites caractéristiques techniques comprennent des indications concernant le calibre de l'aiguille de ladite seringue (5).
